# EUROPEAN PATENT APPLICATION

(11) **EP 4 685 189 A1**
(43) Date of publication of application: **28.01.2026**
(21) Application number: 24190568.6
(22) Date of filing: 24.07.2024
(51) Int. Cl.: C08L 77/02

(54) **POLYAMIDE COMPOSITION AND ARTICLES PREPARED THEREFROM**

(71) Applicant: Evonik Operations GmbH, 45128 Essen (DE)
(72) Inventor: DANKE, Varun, 40597 Dusseldorf (DE); LINEMANN, Reinhard, 66121 Saarbrücken (DE); ALTKEMPER, Stefan, 46282 Dorsten (DE)
(74) Representative: Evonik Patent Association

(57) **Abstract**

The present disclosure relates to a polyamide composition comprising a linear aliphatic polyamide a) an excess of COOH groups of 20 to 120 mmol/kg; or b) an excess of NH2 groups of 20 to 120 mmol/kg; an acid modified polymer; and an amine modified polymer. Also disclosed is a method to prepare the composition and an article prepared from the polyamide composition.

## Description

### Field of the present disclosure

The present disclosure relates to a polyamide composition and to articles prepared from the same.

### Background

Polyamides, with their chemical and thermal stability, good processability, and mechanical strength, are among candidates for various applications.

The market desires polyamide compositions with good handling and high mechanical strength. In the past, the mechanical strength could be tuned by addition of auxiliaries or additives, such as, inorganic fillers, impact modifiers and/or compatibilizers. However, it was observed that the additives may enhance one set of performances while sacrificing another set. Thus, polyamide compositions with a delicate balance of performances and high impact strength, are demanded.

Published European application EP2778190 disclosed a polyamide molding material in which an impact modifier in the form of maleic acid anhydride modified styrene-ethylene/butylene-styrene block copolymer, was introduced to the polyamide composition.

### Summary of the present disclosure

It is one objective of the present disclosure to provide a polyamide composition which simultaneously can achieve desired performances, especially high mechanical strength in a wide temperature range.

Such objective is achieved by providing a polyamide composition comprising a linear aliphatic polyamide, an acid modified polymer and an amine modified polymer.

The new polyamide compositions demonstrate high mechanical strength in a temperature range from - 40 °C to 40°C.

Preferably, the amine modified polymer has at least comonomer selected from ethylene, propylene, 1-butylene, 2-butylene, butadiene, and styrene.

Preferably, the acid modified polymer has at least one first comonomer selected from ethylene, propylene, 1-butylene, 2-butylene, butadiene, and styrene and at least one second comonomer selected from maleic anhydride, itaconic anhydride, or citraconic anhydride.

Preferably, the amine modified polymer has a weight percentage of 0.5 wt.% to 24.5 wt.%, more preferably 1 wt.% to 19 wt.%, based on the total weight of the polyamide composition.

Preferably, the acid modified polymer has a weight percentage of 0.5 wt.% to 24.5 wt.%, more preferably 1 wt.% to 19, based on the total weight of the polyamide composition.

In a preferred embodiment of the invention the sum amount of weight percentage of amine modified polymer and of acid modified polymer 1 wt.% to 25 wt.%, more preferably 2 wt.% to 20 wt.%, even more preferably 4 wt.% to 18 wt.%, based on the total weight of the polyamide composition.

In a preferred embodiment of the invention the mass ratio of the amine modified polymer to the acid modified polymer is 0.02 : 1 to 1 : 0.02, more preferably 0.1 : 1 to 1 : 0.1 and even more preferably 0.3 : 1 to 1 : 0.3.

Preferably, the polyamide is selected from the group consisting of a linear aliphatic polyamide having on average 8-14 carbon atoms in the monomer units.

Preferably, the polyamide is selected from the group consisting of (b1) polyamide of the AB type; or (b2) polyamide of the AABB type; or any mixture or copolymer thereof. The AB type is preferred

Preferably, a test piece produced from the polyamide composition has an impact strength no less than 60kJ/m², preferably 70 kJ/m² measured according to ISO 179 at 40 °C.

Another aspect of the invention is a method for producing the above-described inventive polyamide composition. The method comprises the step of admixing a polyamide, an acid modified polymer and an amine modified polymer to obtain the polyamide composition. Acid modified polymer and amine modified polymer can be added to the polyamide subsequently or simultaneously. In addition, the modified polymers can be admixed in dry blend.

Another perspective of the present disclosure is to provide an article prepared from the polyamide composition.

Another aspect of the invention is the use of the above described polyamide composition in in extruded tubes for various applications including multilayer constructions for automobile applications such as fuel transport, cooling lines, air brake tubes, pipes for oil and gas including hydrogen, transport, liner applications, in coating formulations for metal coating, in injection molded parts for sports - shoe soles, ski boots and in other industrial applications such as housings.

### Detailed description

The polyamide composition according to the present disclosure comprises a polyamide, an acid modified polymer and an amine modified polymer. The polyamide composition could achieve a good impact strength.

The test piece has an impact strength no less than 60 kJ/m², 70 kJ/m² measured according to ISO 179 at 40 °C.

The polyamide composition may be processed into articles by melting and moulding by processes known to those skilled in the art such as selective laser sintering, composite filament fabrication, selective heat sintering, fusion deposition modelling, fused filament fabrication, injection moulding, extrusion, pressing, or rolling.

The articles may be in used in one of the following sectors: electrical equipment, sports items, optical equipment, sanitary and hygiene items, household equipment, communications technology, automobile technology, energy and drive technology, mechanical engineering, protective eyewear, protective shields, housings, or medical equipment.

### Polyamide

The polyamide used in the present disclosure may include at least one selected from the group consisting of a linear aliphatic polyamide having on average 8-14 carbon atoms in the monomer units.

### Linear aliphatic polyamide

The linear aliphatic polyamide has on average from 8 to 12 carbon atoms in the individual monomer units. Said polyamide is producible from a combination of diamine and dicarboxylic acid (AABB type), from an ω-aminocarboxytic acid and/or the corresponding lactam (AB type). The monomer units in question are therefore the units which derive from lactam, ω-aminocarboxytic acid, diamine or dicarboxylic acid. The following polyamides are suitable by way of example:
- Average of 8 carbon atoms: PA88, PA79, PA97, PA610, PA106
- Average of 8.5 carbon atoms: PA 89, PA98, PA611, PA116, PA512
- Average of 9 carbon atoms: PA99, PA810, PA108, PA612, PA126
- Average of 9.5 carbon atoms: PA910, PA109, PA811, PA118, PA613, PA136, PA514
- Average of 10 carbon atoms: PA10, PA1010, PA812, PA128, PA614, PA146
- Average of 10.5 carbon atoms: PA1011, PA813, PA138, PA516
- Average of 11 carbon atoms: PA11, PA1012, PA1210, PA913, PA139, PA814, PA148, PA616
- Average of 11.5 carbon atoms: PA1112, PA1211, PA1013, PA1310, PA914, PA149, PA815, PA617, PA518
- Average of 12 carbon atoms: PA12, PA1212, PA1113, PA1014, PA1410, PA816, PA618

Suitable polyamides further include copolyamides which, on the basis of suitable comonomer selection, comply with the proviso that the monomer units comprise on average 8 to 12 carbon atoms, for example the copolyamide composed of laurolactam, decanediamine and dodecanedioic acid (co-PA12/1012). It will be appreciated that the component employed may also be mixtures of appropriate polyamides, sufficient mutual compatibility being advantageous.

The AB type is preferred.

Preferably employed linear aliphatic polyamides are PA612, PA1010, PA1012, PA11 or PA12, particularly preferably PA11 or PA12.

### Acid modified polymer

Acid modified polymers refer to a family of copolymers that are resultants of acid functionalization of a base polymer. The acid modified polymers may be prepared from a base polymer and an unsaturated acid or anhydride as a functionalizing agent through an acid modification process. This acid modification may be carried out by grafting a base polymer with unsaturated carboxylic acids and/or unsaturated carboxylic acid derivatives. Preferably, a carboxylic acid or a carboxylic acid derivative selected from the group consisting of unsaturated carboxylic esters and unsaturated carboxylic anhydrides is used. The conditions under which the grafting of the base polymer proceeds are well known to a skilled person. Acid modified polymer contains carboxylic groups or anhydride groups in the macromolecule introduced by the modification process.

The unsaturated carboxylic acid is a carboxylic acid with at least one unsaturated carbon-carbon bond. Preferably, the unsaturated carboxylic acid is one or more selected from acrylic acid, methacrylic acid, alpha ethylacrylic acid, maleic acid, fumaric acid, itaconic acid, citraconic acid, aconitic acid, tetrahydrophthalic acid, or butenylsuccinic acid.

The unsaturated carboxylic ester is an ester of an unsaturated carboxylic acid. Preferably, the unsaturated carboxylic ester is one or more selected from esters of acrylic acid, methacrylic acid, alpha ethylacrylic acid, maleic acid, fumaric acid, itaconic acid, citraconic acid, aconitic acid, tetrahydrophthalic acid, or butenylsuccinic acid.

The unsaturated carboxylic anhydride is an anhydride of an unsaturated dicarboxylic acid. Preferably, the unsaturated carboxylic anhydride is one or more selected from maleic anhydride, itaconic anhydride, or citraconic anhydride.

The base polymers may include a homopolymer or copolymer. The homopolymer or copolymer may be an addition polymer or a condensation polymer. With regards to the addition polymer, it may have at least one monomer or comonomer selected from ethylene, propylene, butylene, styrene, butadiene, any other olefin, (meth)acrylic acid, an alkyl (meth)acrylate, (meth)acrylamide, or (meth)acrylonitrile. With regards to the condensation polymer, it may include one or more selected from polyethers, polyesters, polycarbonates, polyurethanes, polyureas, polyamides, phenol-aldehyde resins, epoxy resins, polysiloxanes, etc. The base polymers may include, for instance, polyethylene (PE), polypropylene (PP), or styrene-ethylene-butylene-styrene copolymer (SEBS).

Exemplary acid modified polymer has at least one first comonomer selected from ethylene, propylene, 1-butylene, 2-butylene, butadiene, and styrene and at least one second comonomer selected from maleic anhydride, itaconic anhydride, or citraconic anhydride.

As an example, acid modified polymers include polyethylene-graft-maleic anhydride, maleic anhydride-grafted PE, maleic anhydride-grafted PP, styrene-maleic anhydride copolymer, maleic anhydride-methyl methacrylate copolymer, maleic anhydride grafted SEBS, or maleic anhydride-acrylamide copolymer.

According to the present disclosure, the degree of functionalization is 0.5 wt.% to 2.5 wt.%, preferably 1.0 wt.% to 2.0 wt.%, more preferably 1.2 wt.% to 1.8 wt.%, based on the total content of acid modified polymer.

It is observed in the present disclosure that acid modified polymer, when added into polyamide composition, could enhance the mechanical strength, especially impact strength, respectively. Without bound by any theory, acid modified polymer contains terminal carboxylic groups, which may react with unreacted amino groups in the polyamide during processing. Thus, acid modified polymer might achieve a high compatibility with polyamide. However, some acid modified polymers, such as maleic anhydride modified styrene-ethylene-butylene-styrene block copolymer (MAH-SEBS), may cause visible yellowing of the resultant polyamide composition.

### Amine modified copolymer

The amine modified polymers are a family of copolymers that have amino end groups. The amine modified copolymers may be prepared from a base polymer according to methods known to a skilled person. Exemplary methods include, nitration followed by reduction, condensation followed by hydrogenation, direct amination, etc..

The base polymers may include a homopolymer or copolymer. The homopolymer or copolymer may be an addition polymer or a condensation polymer. With regards to the addition polymer, it may have at least one monomer or comonomer selected from ethylene, propylene, butylene, styrene, butadiene, any other olefin, (meth)acrylic acid, an alkyl (meth)acrylate, (meth)acrylamide, or (meth)acrylonitrile. With regards to the condensation polymer, it may include one or more selected from polyethers, polyesters, polycarbonates, polyurethanes, polyureas, polyamides, phenol-aldehyde resins, epoxy resins, polysiloxanes, etc.

As an example, the amine modified polymer includes amine-modified polystyrene-poly(ethylene/butylene)block-polystyrene (amine-modified SEBS).

The present disclosure is illustrated by way of example and comparative example hereinbelow.

### Materials and Testing

The following materials were employed in the examples:
VESTAMID L1901 nf (PA12 COOH) from Evonik Operations GmbH is a polyamide 12 with an excess of COOH groups in an amount of 61 mmol/kg.

VESTAMID Z4887 nf (PA12 NH2) from Evonik Operations GmbH is a polyamide 12 with an excess of NH2 groups in an amount of 62 mmol/kg.

Tuftec^{™} M1913 from Asahi Kasei Corporation is a maleic anhydride modified SEBS thermoplastic elastomer. It is used as a compatibilizer of polar resins or an impact modifier of engineering plastics such as polyamide and polyester.

Tuftec^{™} MP10 from Asahi Kasei Corporation is an amine modified styrene ethylene butadiene styrene (SEBS) thermoplastic elastomer with a polystyrene content of 30%.

The content of residue carboxylic groups and residue amino groups within the polymer composition was conducted by titration.

For the carboxylic groups within polyamides, the polymer composition was dissolved in benzyl alcohol under heating and then was titrated at 185°C with an ethylene glycol solution of potassium hydroxide (KOH) against phenolphthalein as indicator.

For the amino groups within polyamides, the polymer composition was dissolved in distilled m-cresol at 100°C and potentiometrically titrated with an ethanolic solution of perchloric acid (HClO₄).

Notched impact strength was determined by CEAST Resil Impactor 6967.000, according to ISO 179/1eA (Charpy) on tensile specimens ISO 527 type 1A which were cut off two ends, 80mm×10mm×4mm at a temperature (23±2) °C, relative humidity (50±10) %.

### Examples

All polyamide compositions were mixed using a Coperion ZSK-26cm co-rotating twin screw extruder, discharged, pelletized to obtain the polymer composites according to the recipe indicated in Tables 1 and 2. The polyamides were fed into the main port of extruder and then mixed at 240°C, and the modifiers were fed simultaneously into the extruder.

The polymer compositions in pellet form were processed on an injection moulding machine Engel VC 650/200 (melt temperature 240°C; mould temperature 80°C) to prepare specimens for mechanical performance tests and optical tests.

The mechanical and optical results of samples made from polyamide compositions in examples (E1 through E6), comparative examples (C1 through C6), and raw materials (R1 and R2) are shown in Tables 1 and 2.

**Table 1: Test results of specimens prepared from PA12 with COOH excess**

| | **R1** | **C1** | **C2** | **E1** | **C3** | **C4** | **E2** | **E3** | **E4** |
|---|---|---|---|---|---|---|---|---|---|
| | | | | | | | | | |
| PA12 COOH | 100 | 95 | 95 | 95 | 85 | 85 | 85 | 85 | 85 |
| MP10 | 0 | 0 | 5 | 3.3 | 0 | 15 | 10 | 7.5 | 5 |
| M1913 | 0 | 5 | 0 | 1.7 | 15 | 0 | 5 | 7.5 | 10 |
| | | | | | | | | | |
| Notched impact (kJ/m²) / -40 °C | 6.01 | 7.17 | 6.78 | 10.98 | 12.44 | 6.07 | 16.25 | 49.23 | 14.66 |
| Notched impact (kJ/m²) / -20 °C | 4.85 | 8.03 | 7.04 | 13.42 | 21.38 | 8.86 | 24.09 | 56.53 | 38.82 |
| Notched impact (kJ/m²) / 0 °C | 4.77 | 12.63 | 7.88 | 15.25 | 33.02 | 12.33 | 73.23 | 58.81 | 70.54 |
| Notched impact (kJ/m²) / 23 °C | 4.86 | 21.20 | 11.22 | 18.71 | 39.97 | 22.13 | 78.97 | 63.24 | 65.70 |
| Notched impact (kJ/m²) / 40 °C | 8.66 | 46.34 | 34.84 | 66.21 | 47.75 | 78.23 | 87.26 | 87.58 | 88.17 |

**Table 2: Test results of specimens prepared from PA12 with NH₂ excess**

| | **R2** | **C5** | **C6** | **E5** | **E6** |
|---|---|---|---|---|---|
| PA12 NH₂ | 100 | 90 | 85 | 85 | 85 |
| MP10 | 0 | 10 | 15 | 5 | 10 |
| M1913 | 0 | 0 | 0 | 10 | 5 |
| Notched impact (kJ/m²) / -40 °C | 6.37 | 6.04 | 7.14 | 34.31 | 57.17 |
| Notched impact (kJ/m²) / -20 °C | 5.67 | 7.68 | 9.89 | 70.35 | 69.12 |
| Notched impact (kJ/m²) / 0 °C | 5.21 | 11.00 | 12.13 | 87.78 | 92.95 |
| Notched impact (kJ/m²) / 23 °C | 4.3 | 19.74 | 26.49 | 97.00 | 93.82 |
| Notched impact (kJ/m²) / 40 °C | 8.86 | 76.43 | 72.67 | 111.42 | 109.4 |

When small amount of acid modification is introduced into amine impact modifier system as compatibilizers, impact strength can be improved (examples E1 to E6).

The results of table 1 and 2 are only comparable using the same amount of modified polymers at the same temperature.

In case of the amine-terminated PA the comparable examples show that even an increase of modified polymers from 10% to 15% by weight does not have a significant effect (C 5 -> C6). This statement is also valid for the acid-terminated PA even by an increase of the modified Polymers from 5 to 15 % by weight (C2 -> C4). Comparing examples C6 with E5 and E6, it is clear that by using a combination of both the amine modified and acid modified polymers in PA12 a significant improvement in impact strength can be achieved over the entire temperature range. The same effect can be seen by comparing C5 with E1. The same trend is also observed by comparing C3 and C4 with E2, E3 and E4, thereby confirming the unexpected effect.

Various aspects and embodiments are possible. Some of those aspects and embodiments are described herein. After reading this specification, skilled artisans will appreciate that those aspects and embodiments are only illustrative and do not limit the scope of the present disclosure.

## Claims

1. A polyamide composition comprising, based on a total weight of the polyamide composition:
a linear aliphatic polyamide
a) an excess of COOH groups of 20 to 120 mmol/kg; or
b) an excess of NH₂ groups of 20 to 120 mmol/kg;
an acid modified polymer; and
an amine modified polymer.

2. The polyamide composition according to Claim 1, wherein the amine modified polymer has at least one comonomer selected from ethylene, propylene, 1-butylene, 2-butylene, butadiene, and styrene.

3. The polyamide composition according to Claim 1, wherein the acid modified polymer has at least one first comonomer selected from ethylene, propylene, 1-butylene, 2-butylene, butadiene, and styrene and at least one second comonomer selected from maleic anhydride, itaconic anhydride, or citraconic anhydride.

4. The polyamide composition according to any of the preceding claims, wherein the amine modified polymer has a weight percentage of 0.5 wt.% to 24.5 wt.%, preferably 1 wt.% to 19 wt.%, based on the total weight of the polyamide composition.

5. The polyamide composition according to any of the preceding claims, wherein the acid modified polymer has a weight percentage of 0.5 wt.% to 24.5 wt.%, preferably 1 wt.% to 19 wt.%, based on the total weight of the polyamide composition.

6. The polyamide composition according to any of the preceding claims, wherein the sum amount of weight percentage of amine modified polymer and of acid modified polymer is 1 wt.% to 25 wt.%, preferably 2 wt.% to 20 wt.%, more preferably 4 wt.% to 18 wt.%, based on the total weight of the polyamide composition

7. The polyamide composition according to any of the preceding claims, wherein the mass ratio of the amine modified polymer to the acid modified polymer is 0.02 : 1 to 1 : 0.02.

8. The polyamide composition according to any of the preceding claims, wherein the mass ratio of the amine modified polymer to the acid modified polymer is 0.1 : 1 to 1 : 0.1.

9. The polyamide composition according to any of the preceding claims, wherein the mass ratio of the amine modified polymer to the acid modified polymer is 0.3 : 1 to 1 : 0.3.

10. The polyamide composition according to any of the preceding claims, wherein the polyamide is selected from the group consisting of:
a linear aliphatic polyamide having on average 8-14 carbon atoms in the monomer units.

11. The polyamide composition according to any of the preceding claims, wherein the polyamide is selected from the group consisting of
(b1) polyamide of the AB type; or
(b2) polyamide of the AABB type; or
any mixture or copolymer thereof.

12. The polyamide composition according to any of the preceding claims, wherein a test piece produced from the polyamide composition has a notched impact strength of no less than 60 kJ/m², preferably 70 kJ/m², measured according to ISO 179 at 40 °C.

13. Method for producing a polyamide composition according to any of the preceding claims by admixing the polyamide, the acid modified polymer and the amine modified polymer.

14. An article prepared from the polyamide composition according to any of the preceding claims.

15. Use of polyamide compositions according to claims 1 to 12 in extruded tubes for various applications including multilayer constructions for automobile applications such as fuel transport, cooling lines, air brake tubes, pipes for oil and gas including hydrogen, transport, liner applications, in coating formulations for metal coating, in injection molded parts for sports - shoe soles, ski boots and in other industrial applications such as housings.
